# EUROPÄISCHE PATENTSCHRIFT

(11) **EP 1 571 370 B1**
(45) Veröffentlichungstag und Bekanntmachung des Hinweises auf die Patenterteilung: **07.05.2008**
(21) Anmeldenummer: 05101008.0
(22) Anmeldetag: 11.02.2005
(51) Int. Cl.: F16F 15/32, F16F 15/34, B41F 13/08

(54) **Vorrichtung zur Verringerung der Unwucht einer Belichtertrommel**
Device for limiting the unbalance of an impression cylinder
Dispositif pour limiter les balourds d'un tambour d'impression

(30) Priorität: 04.03.2004 DE 102004010470
(43) Veröffentlichungstag der Anmeldung: 07.09.2005
(73) Patentinhaber: Heidelberger Druckmaschinen Aktiengesellschaft, 69115 Heidelberg (DE)
(72) Erfinder: Lassen, Bernd, 24248 Mönkeberg (DE)

(56) Entgegenhaltungen:
- EP-A- 1 219 943
- DE-A1- 19 920 699
- US-A- 3 074 293
- PATENT ABSTRACTS OF JAPAN Bd. 2000, Nr. 02, 29. Februar 2000 (2000-02-29) & JP 11 311863 A (DAINIPPON SCREEN MFG CO LTD), 9. November 1999 (1999-11-09)

## Beschreibung

Die Erfindung betrifft eine Vorrichtung zum Auswuchten einer, mit einer Welle angetriebenen Trommel einer Belichtungseinrichtung, insbesondere eines Druckplattenbelichters, umfassend wenigstens zwei, beweglich angeordnete Massenelemente.

Zur Belichtung werden Druckplatten auf die Trommel eines Druckplattenbelichters eingespannt. Während der Belichtung wird die Trommel in eine rotierende Bewegung versetzt, dies kann über eine entsprechende Welle erfolgen, die mit der Trommel verbunden ist.

Auf die Trommel können Druckplatten unterschiedlichen Formats und unterschiedlicher Marken, bzw. unterschiedlicher Art aufgespannt werden. Diese Druckplatten führen dann, zusammen mit möglichen weiteren Faktoren, wie z.B. Klammern zum Einspannen der Druckplatten, zu einer Unwucht der Trommel. Diese Unwucht tritt dann besonders schädlich in Erscheinung, wenn die Trommel mit einer hohen Geschwindigkeit rotiert.

Zur Verringerung dieser Unwucht wird in der DE 101 28 606 A1 vorgeschlagen, dass Massenelemente bei Bedarf entlang eines vorgegebenen Bewegungsweges zu Auswuchtpositionen verschoben werden. Diese Auswuchtpositionen werden je nach verwendeten Druckplatten bestimmt und von den Massenelementen eingenommen, bevor die Trommel in Rotation versetzt wird. An den Auswuchtpositionen werden die Massenelemente dann über einen Formschluss und eventuell zusätzlich federbelastet, fixiert.

In der DE 101 28 606 A1 ist es vorgesehen, dass der Bewegungsweg in den Stirnflächen der Trommel eingearbeitet ist. Eine Nachrüstung eines Druckplattenbelichters mit der beschriebenen Vorrichtung ist daher nur schlecht oder gar nicht möglich. Da hier erfindungsgemäß mehrere Massenelemente entlang eines Bewegungsweg verschoben werden, ist es nicht möglich eine Unwucht dadurch auszugleichen, dass mehrere Massenelemente die gleichen Auswuchtpositionen einnehmen. Statt dessen ist es notwendig, dass schwerere Gewichte verwendet werden.

Aus der japanischen Veröffentlichung JP 11311863 ist es bekannt, dass ein entsprechendes Massenelement mittels Magnetkraft an einer Auswuchtposition fixiert wird. Auch hier ist es nicht möglich, dass zwei gleichartige Massenelemente an der gleichen Position fixiert werden. Außerdem ist hier nur eine händische Verstellung der Auswuchtposition des Massenelementes möglich. Eine automatische Auswuchtung kann nicht erfolgen.

In der US-Patentschrift US 3,074,293 wird vorgeschlagen, eine Unwucht einer rotierenden Achse über miteinander verschraubte Hälften von Scheiben auszugleichen. Die beiden Scheibenhälften sollen aus unterschiedlichen Materialien gefertigt sein, so dass sie unterschiedliches Gewicht aufweisen, der Schwerpunkt mithin außerhalb der Achse liegt. Mittels einer Schraubverbindung werden die beiden Hälften um die Achse herum fest verbunden und rotieren gemeinsam mit der Achse. Um eine Unwucht auszugleichen, ist es vorgesehen, dass die Schraubverbindung nur gelöst wird um die beiden Hälften gemeinsam um die Achse herum auf eine Auswuchtposition verdreht werden. Ein einfaches automatisches Auswuchtsystem kann hierdurch nicht erreicht werden.

Ein automatisches Auswuchtsystem ist aus der DE 199 20 699 A1 bekannt. Hier werden zwei Ausgleichsringe vorgeschlagen, die an einem entsprechenden Rotor angebracht sind. Diese Ausgleichsringe weisen eine definierte Unwucht auf und sind über Arretierungselemente in Form von formschlüssig eingreifenden Kugeln oder Dauermagneten kräftemäßig mit der Rotorachse gekoppelt. Ein automatisches Verstellen der Ausgleichsringe in eine Auswuchtposition erfolgt hier über ein externes Einwirken einer Sperrvorrichtung, die die Ausgleichsringe gegen die Kraftkopplung der Arretierelemente sperrt, so dass die Kraftkopplung ausgeschaltet wird und die Ausgleichsringe in eine Auswuchtposition verdrehbar werden. Eine Deaktivierung der Sperreinrichtung führt zu einer neuen Arretierung der Arretierungselemente.

Es können hier immer nur diskrete Ausrichtpositionen eingenommen werden, da die Arretierungselemente nur an den dafür vorgesehenen Positionen arretieren können. Hierdurch wird das Ausgleichen von Unwuchten, die durch Druckplatten unterschiedlichen Formates und unterschiedlichen Gewichtes erzeugt werden, zumindest erschwert. Dadurch, dass die Arretierungseinrichtung, die hier vorgeschlagen wird, jeweils Elemente bzw. Mittel sowohl auf Seiten der Ausgleichringe als auch auf Seiten der Achse des Rotors benötigen, ist eine Nachrüstung eines Druckplattenbelichters praktisch nicht möglich.

Die Aufgabe der vorliegenden Erfindung ist es, eine Vorrichtung der oben genannten Gattung vorzuschlagen, mit der die Unwucht eines Druckplattenbelichters mit möglichst geringen Gewichten wenigstens verringert werden kann und die auf einfache Weise an bereits vorhandenen Druckplattenbelichtern nachgerüstet werden kann.

Die Aufgabe der Erfindung wird durch eine Vorrichtung mit zwei Massenelemente gelöst, deren Schwerpunkte jeweils von der Welle beabstandet sind und die unabhängig voneinander und von der Trommel auf der Welle drehbar gelagert sind.

Weiter ist es vorgesehen, dass wenigstens eine Bremsvorrichtung zur Vermeidung von ungewollten Verstellungen der wenigstens zwei Massenelemente vorhanden ist, welche wenigstens ein Reibschlussorgan umfasst.

Vorteilhafterweise können die Massenelemente auch nachträglich auf der Welle des Druckplattenbelichters gelagert werden. Dieses ergibt sich daraus, dass die Massenelemente unabhängig von der Trommel und auch voneinander gelagert sind. Es ist daher nur notwendig, dass die Massenelemente auf der Welle befestigt werden können. Die Schwerpunkte der Massenelemente sollen erfindungsgemäß von der Welle beabstandet sein. Dieses ermöglicht dann über eine Drehung der Massenelemente relativ zur Welle einen Ausgleich der Unwucht der Trommel. Die Trommel und die Massenelemente sind zur Verringerung der resultierenden Unwucht über die Welle rotationsmäßig miteinander gekoppelt.

Die Bremsvorrichtung verhindert dann ein Verrutschen der Massenelemente auf der Welle, insbesondere während des Betriebs der Belichtungseinrichtung.

Diese Bremsvorrichtung kann dabei erfindungsgemäß selbstsperrend sein, d.h. sie muss aktiv außer Funktion gesetzt werden. Ein versehentliches Verstellen der Massenelemente ist dadurch schwerer möglich.

Über das Reibschlussorgan kann ein ungewolltes Verstellen der Massenelemente verhindert werden. Ein Verstellen der Massenelemente ist nur möglich, wenn eine Kraft aufgewendet wird, die die durch das Reibschlussorgan bedingte Reibungskraft übersteigt. Das Reibschlussorgan soll dabei so beschaffen sein, dass die Reibungskraft größer ist als die bei einem normalen Betrieb des Druckplattenbelichters zu erwartenden auftretenden Kräfte.

Vorteilhafterweise können gewollte Verstellungen der Massenelemente dann durch, auf die Massenelemente einwirkende Kräfte erreicht werden, die die Reibungskraft übersteigen. Es sind dann keine weiteren Einstellungen zur Außerfunktionssetzung der Bremsvorrichtung notwendig. Auch müssen keine mechanischen Funktionselemente eingesetzt werden, die ein ungewolltes Verstellen der Massenelemente verhindern, solche Funktionselemente können verschleißen und z.B. während des Betriebe durchbrechen und die Bremswirkung dann vollständig außer Kraft setzen. Eine Abnutzung des Reibschlussorgans würde dagegen eine Herabsetzung der Reibkraft bedeuten, die sich durch ein langsames Verstellen der Massenelemente bemerkbar machen würde, es wären dann wenigstens keine erheblichen Schäden an der Maschine, der Bremsvorrichtung oder den Massenelementen durch ein plötzliches Wegfallen der Bremswirkung zu erwarten.

In einer Weiterbildung der Erfindung ist es vorteilhafterweise vorgesehen, dass das wenigstens eine Reibschlussorgan federbelastet ist. Hierdurch kann die Reibungskraft des Reiborgans aktiv durch eine Feder verstärkt werden. Die Feder kann dafür Bestandteil der Bremsvorrichtung sein. Es sind durch die Federkräfte dann vorteilhafterweise geringere Anforderungen an die Reibungseigenschaften der Reibschlussorgane zu stellen.

In einer möglichen Ausbildungsform der Erfindung ist es vorgesehen, dass die Reibschlussorgane Kontakte der Massenelemente zu Widerlagern in Axialrichtung der Welle und/oder zwischen den Massenelementen selber bilden.

Bei den Widerlagern kann es sich beispielsweise um bereits auf der Welle vorhandene Elemente und/oder auch um die Trommel selber handeln. Hierbei ist zu beachten, dass die Widerlager rotationsmäßig mit der Welle gekoppelt sein sollen.

Vorteilhafterweise können die Reibschlussorgane so zwischen den Widerlagern und/oder den Massenelementen vorgesehen sein, dass sie eine rotationsmäßige Kopplung zwischen den Massenelementen und, über die Widerlager, mit der Welle bilden. Durch die Reibschlussorgane können dann ungewollte Verstellungen der Drehpositionen der Massenelemente während der Rotation der Welle vermieden werden. Eine Verringerung der Unwucht der Trommel bleibt dann auch während der Rotation gewährleistet.

Die Reibschlussorgane können insbesondere so federbelastet sein, dass sie die Massenelemente auseinander und gegen die Widerelemente oder gegen weitere Reibschlussorgane zwischen den Widerelementen und den Massenelementen pressen. Die Massenelemente können dadurch so eingeklemmt werden, dass die gewünschte rotationsmäßige Kopplung erreicht wird.

In einer alternativen erfindungsgemäßen Ausgestaltungsform ist es vorgesehen, dass die Reibschlussorgane Kontakte zwischen den Massenelementen und der Welle bilden.

Die Reibschlussorgane können hierfür insbesondere von den Massenelementen umfasst werden und federbelastet gegen die Welle gedrückt werden. Durch einen Kontakt, der z.B. über einen Formschluss hergestellt werden kann, mit einem Massenelement stellt das Reibschlusselement eine gewünschte vorteilhafte rotationsmäßige Kopplung zwischen dem Massenelement und der Welle her.

Bei einem bereits aufgebauten Druckplattenbelichter ist die Welle mitunter an den Seiten noch mit weiteren Einrichtungen oder Elementen auf eine Weise verbunden, dass ein Anbringen der Massenelemente auf die Welle von einer Stirnseite der Welle her nicht möglich ist. Erfindungsgemäß ist es daher vorgesehen, dass die wenigstens zwei Massenelemente wenigstens zwei schellenartige, trennbare Teilelemente umfassen. Die Teilelemente können dann zum Anbringen voneinander getrennt werden, um die Welle herum angelegt und dann wieder miteinander verbunden werden. Auf einfache Weise kann dann auch bei strukturellen Behinderungen ein Auswuchten der Trommel durch die Massenelemente gewährleistet werden.

Als weiterer Vorteil ergibt sich durch die schellenartigen, trennbaren Teilelemente auch, dass ein Nachrüsten der Massenelemente auf einfache Weise möglich wird. Solch ein Nachrüsten wird dann notwendig, wenn die Drehzahl des Druckplattenbelichters deutlich erhöht wird. Eine Erhöhung der Drehzahl kann durch größere Empfindlichkeit der verwendeten Druckplatten oder auch durch eine größere Energiedichte eines vom Druckplattenbelichter umfassten Lasers notwendig werden. Die notwenige Verweildauer des Laserstrahls zum Belichten einer Druckplatte nimmt dann ab, wodurch höherer Drehzahlen der Trommel möglich, bzw. notwenig werden.

Bei geringen Drehzahlen sind an die Massenelemente bzgl. der genauen Lage ihrer Schwerpunkt und des exakten Gewichtes der Massenelemente nicht so hohe Ansprüche zu stellen, wie bei hohen Drehzahlen. Kleine Ungenauigkeiten und kleine verbleibende Unwuchten können dann noch unschädlicherweise toleriert werden. Die Verwendung von solcher Massenelemente mit niedrigeren Anforderungen hat wenigstens finanzielle Vorteile.

Ändern sich die Anforderungen an die Massenelemente aber, wie z.B. durch höhere Drehzahlen der Trommel, so ist, wie beschrieben, durch die schellenartigen, trennbaren Teilelemente ein Nachrüsten mit entsprechenden Massenelementen, die höhere Präzision bzgl. ihrer Masse und der Position ihres Schwerpunktes garantieren, auf einfache Weise möglich.

In einer möglichen Weiterbildung der Erfindung ist es vorgesehen, dass die Massenelemente im Wesentlichen Scheiben sind, deren Schwerpunkt durch Materialaussparungen exzentrisch verlagert ist.

Vorteilhafterweise sind Scheiben platzsparend auf der Welle anbringbar und können so auch in einem Bereich zwischen der Trommel und weiteren Elementen angebracht werden.

Das Aussparen von Material zur Verlagerung der Schwerpunkte der Massenelemente hat den Vorteil, dass solche Scheiben einfach herstellbar sind und durch die Aussparungen auch einfach transportiert werden können.

In einer alternativen Weiterbildung der Erfindung ist es vorgesehen, dass die Massenelemente im Wesentlichen Scheiben sind, deren Schwerpunkt durch Materialauswüchse exzentrisch verlagert ist.

Der Vorteil von Scheiben wurde schon erläutert, auch solche Materialauswüchse sind günstig herzustellen und können die Handhabung der Scheiben vereinfachen.

In einer weiteren alternativen Ausführungsform ist es vorgesehen, dass die Massenelemente im Wesentlichen Scheiben sind, die zur exzentrischen Verlagerung der Schwerpunkte jeweils inhomogene Dichten aufweisen.

Erfindungsgemäß kann solch eine inhomogene Dichte auch durch ein nachträglich eingebrachtes Gewichtselement verursacht werden. Auf diese einfache Weise ist es möglich Scheiben mit unterschiedlichen Schwerpunkten aber gleicher Form herzustellen, indem unterschiedliche Gewichtselemente eingebracht werden. Dieses vereinfacht den Herstellungsprozess und die Scheiben können auf einfache Weise an unterschiedliche Erfordernisse angepasst werden.

In einer erfindungsgemäßen Ausgestaltung der Vorrichtung ist es vorgesehen, dass die Massenelemente im Wesentlichen kreisrund sind. Hierdurch können vorteilhafterweise Verletzungsgefahren reduziert werden, die durch die sich schnell mit der Welle drehenden Massenelemente auftreten können. Auch sind solche kreisrunden Massenelemente auf einfache Weise herstellbar, transportierbar und handelbar und können nicht so leicht beschädigt werden, da keine vorstehenden Kanten oder Ähnliches abbrechen oder sonst wie beschädigt werden können.

In einer besonders vorteilhaften Weiterbildung der erfindungsgemäßen Vorrichtung ist eine Stelleinrichtung für die wenigstens zwei Massenelemente, zum Einstellen ihrer Drehstellung auf der Welle vorgesehen. Diese Stelleinrichtung richtet die Massenelemente auf der Welle so aus, dass deren Schwerpunkte in solche Richtungen weisen, so dass insgesamt eine Unwucht der Trommel ausgeglichen wird.

In einer vorteilhaften Ausgestaltung der Stelleinrichtung ist wenigstens ein Festhalter zum zumindest zeitweisen Festhalten zumindest eines Massenelements relativ zur Bewegung der Welle vorgesehen.

Insbesondere kann für jedes Massenelement ein Festhalter vorgesehen sein. Die Massenelemente können vorteilhafterweise einen Bolzen, einen Eingriff oder ein ähnliches Element umfassen, das einen Kontakt mit dem Festhalter auf einfache Weise gewährleisten kann.

Der Festhalter kann das Massenelement festhalten, während sich die Welle dreht. Der Festhalter soll eine Steifigkeit aufweisen, dass durch die Drehung der Welle eine Kraft durch den Festhalter auf das Massenelement ausgeübt wird, die ausreicht um eine Reibungskraft durch ein erfindungsgemäßes Reibschlussorgan zu überwinden, ohne dass der Festhalter dadurch beschädigt werden kann. Die Welle kann sich dann so unter dem Massenelement drehen, dass die Drehstellung der Massenelemente auf gewünschte Weise eingestellt werden kann. Die Massenelemente können dabei nacheinander vom gleichen Festhalter eingestellt werden oder auch von unterschiedlichen Festhaltern, die jeweils einem Massenelement zugeordnet werden können. Es ist auch möglich, dass die Massenelemente im Wesentlichen gleichzeitig von unterschiedlichen Festhaltern festgehalten werden während die Welle rotiert. Insbesondere kann es vorgesehen sein, dass die Festhalter ortsfest angebracht sind.

Weisen die Massenelemente ein kontaktierendes, sich mitdrehendes Element auf, dass den Kontakt mit einem ortsfesten Festhalter herstellt, so reicht eine zweimalige Drehung der Welle aus um eine genau definierte Drehstellung, die Grundstellung der Massenelemente zu erreichen. Hierfür und für zeitlich unabhängige Verstellungen der Drehstellungen der Massenelemente ist es vorteilhafterweise vorgesehen, dass der wenigstens eine Festhalter, vorzugsweise gesteuert, in Funktion schaltbar ist.

Werden auf dem Druckplattenbelichter nacheinander Druckplatten unterschiedlicher Art, Formats oder Gewichts aufgespannt, so ist es dadurch möglich die Drehstellungen der Massenelemente vor einer jeweiligen Inbetriebnahme der Belichtungseinrichtung auf die neuen Druckplatten einzustellen. Insbesondere kann es vorgesehen sein, dass in einem Speicherelement, dass der Belichtungseinrichtung zugeordnet sein kann, eine Zuordnungstabelle gespeichert ist, die jeder Druckplattenart (Format, Gewicht, Hersteller, Artikelnr., Empfindlichkeit,....) eine bestimmte Stellung aller Massenelemente zuordnet, die jeweils die durch die Druckplattenart verursachten Unwuchten minimiert. Durch zweimaliges Drehen der Welle bei gleichzeitig in Funktion geschaltetem Festhalter werden die Massenelemente dann in die bekannte Grundstellung gedreht. Aus dieser Grundstellung können die Massenelemente dann bei zeitlich unterschiedlich aktivierten Festhaltern in die, für die jeweilige Druckplattenart in der Zuordnungstabelle vorgesehenen Drehstellungen verstellt werden. Diese Verstellung geschieht dabei bevorzugt automatisch, z.B. über eine der Bremsvorrichtung oder dem Druckplattenbelichter zugeordnete CPU. Insbesondere ist es auch möglich, dass mehrere Druckplatten gleichzeitig aufgespannt werden und auch für die unterschiedlichen möglichen Kombinationen von Druckplattenarten Drehstellungen der Massenelemente in der Zuordnungstabelle gespeichert sind.

In einer Erweiterung der erfindungsgemäßen Vorrichtung ist es vorgesehen, dass wenigstens jeweils zwei Massenelemente vor jeder Stirnseite der Trommel angeordnet sind. Hierdurch kann eine Unwucht vorteilhafterweise durch wenigstens vier Massenelemente ausgeglichen werden, die dafür jeweils geringere Massen aufweisen und weniger Platz auf der Welle an der jeweiligen Stirnseite der Trommel benötigen. Zudem wird hierdurch vorteilhafterweise ein Schlingern der Trommel durch eine ungleichmäßige axiale Massenverteilung verhindert. Die Massenelemente werden hierfür bevorzugt symmetrisch ausgerichtet.

Zur weiteren Verringerung der notwendigen Massen der jeweiligen Massenelemente kann es erfindungsgemäß auch vorgesehen sein, dass die Trommel selber eine fixe Gegenunwucht umfasst. Diese Gegenunwucht soll so positioniert sein und so ein Gewicht aufweisen, dass die maximale Gesamtunwucht, die durch eine auf der Trommel eingespannte Druckplatte erzeugt wird, insgesamt verringert wird.

Ausführungsbeispiele einer erfindungsgemäßen Vorrichtung zum Auswuchten einer, mit einer Welle angetriebenen Trommel einer Belichtungseinrichtung, aus der sich weitere erfindungsgemäße Merkmale ergeben können, auf die die Erfindung in ihrem Umfang nicht beschränkt, sind in den folgenden Zeichnungen dargestellt. Es zeigen schematisch:
- Fig. 1: eine Aufsicht auf einen Druckplattenbelichter mit einer Vorrichtung zur Verringerung der Unwucht,
- Fig. 2: einen Schnitt A durch ein Massenelement aus der Fig. 1,
- Fig. 3: einen Aufsichtsausschnitt eines Druckplattenbelichters mit Massenelementen mit alternativen Bremsvorrichtungen,
- Fig. 4: eine Veranschaulichung der Unwucht eines bespannten Druckplattenbelichters,
- Fig. 5: eine Veranschaulichung der Wirkung einer fixen Gegenunwucht.

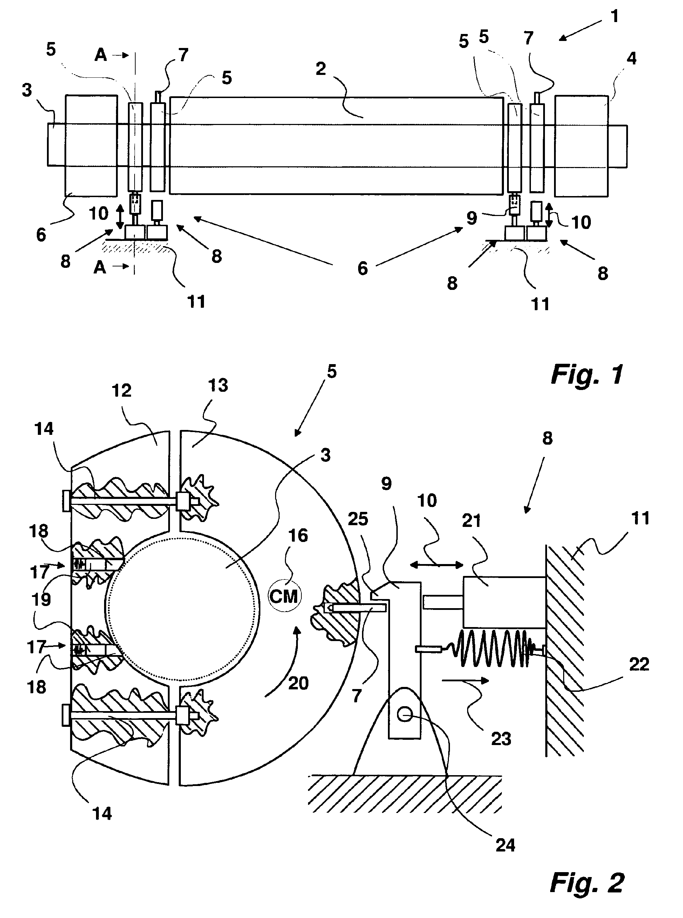

Die Fig. 1 zeigt schematisch eine Aufsicht auf einen Druckplattenbelichter 1. Der Druckplattenbelichter 1 umfasst eine Trommel 2, die auf einer Welle 3 gelagert und durch sie angetrieben wird. Auf der Welle 3 befinden sich Widerlager 4. Bei den Widerlagern 4 kann es sich beispielsweise um Antriebselemente handeln, über die die Welle 3 durch eine nicht dargestellte Antriebseinrichtung in Rotation versetzt wird. Es kann sich auch um Lagerelemente handeln, die eine möglichst reibungsarme Lagerung der Welle 3 gewährleisten. Die Widerlager 4 können aber auch extra in Kopplung mit der Welle 3 angebracht werden, um ein ungewolltes Verstellen von Massenelemente 5 besser vermeiden zu helfen.

Die Massenelemente 5 sind Bestandteil einer Vorrichtung 6 zur Verringerung der Unwucht der Trommel 2. Es befinden sich jeweils zwei Massenelemente 5 auf jeder Stirnseite der Trommel 2. Sie sind auf der Welle 3 angeordnet. Die Massenelemente 5 sind jeweils paarweise zwischen einer Stirnseite der Trommel 2 und einem Widerlager 4 angeordnet.

Ein Massenelemente 5 weist jeweils einen Bolzen 7 auf, der radial von der Welle 3 wegweist. Dieser Bolzen 7 dient zur Gewährleistung eines Kontaktes mit einer Stelleinrichtung 8. Jedem Massenelement 5 ist dabei eine Stelleinrichtung 8 zugeordnet. Jede Stelleinrichtung 8 umfasst einen Festhalter 9, der in Richtung eines Doppelpfeils 10 zur Kontaktierung mit den Bolzen 3 zu einem Massenelement 5 bewegt werden kann. Die Stelleneinrichtungen 8 sind ortsfest angebracht, was hier symbolisch durch eine gestrichelte Berandung 11, an der die Stelleinrichtungen 8 angebracht sind, dargestellt ist.

Ein Schnitt A durch ein Massenelement 5 und eine Stelleinrichtung 8 der Fig. 1 ist in Fig. 2 vergrößert dargestellt. Gleiche Bezugszahlen bezeichnen gleiche Elemente.

Ein Massenelement 5 ist aus zwei Teilelementen 12 und 13 aufgebaut, die schellenartig um die Welle 3 angebracht sind. Die Teilelemente 12, 13 sind dafür über Verbindungselemente 14, z.B. Schrauben, miteinander verbunden. Das Massenelement 5 ist im Wesentlichen eine Kreisscheibe, die eine abgeflachte Seite 15 aufweist. Der Schwerpunkt CM des Massenelements 5 liegt nicht in der Welle 3, sondern an einem Ort 16, der der Seite 15 gegenüber liegt und exzentrisch von der Welle 3 verschoben ist. Der Bolzen 7 des Massenelements 5 liegt in dem hier dargestelltem Aufbau der Seite 15 gegenüber. Es sind hierfür aber anderen Positionen auf dem Umfang des Massenelements 5 auch möglich. In der hier gewählten Darstellungsform sind Bereiche des Massenelements 5 durchbrochen um eine Sicht auf die Verbindungselemente 14, den Bolzen 7 und auf eine mögliche Bremsvorrichtung 17 zu ermöglichen.

Ein Massenelement 5 umfasst zwei Bremsvorrichtungen 17. Eine Bremsvorrichtung 17 weist ein Reibschlussorgan 18 auf, welches von Federn 19 radial an die Welle 3 gepresst wird. Die Federn 19 sind mit der abgeflachten Seite 15 verbunden. Hierfür kann die abgeflachte Seite 15 beispielsweise auch hier nicht dargestellte Blattfedern aufweisen, die festgeschraubt oder genietet an der Seite 15 angebracht sind und die Federkraft auf die Reibschlussorgane 18 unterstützen. Die Federn 19 sind, wenn sich das Massenelement 5 auf der Welle 3 befindet, zusammengestaucht. Ein Reibschlussorgan 18 wird dadurch so belastet, das ein Reibungskraft zwischen dem Reibschlussorgan 18 und der Welle 3 aufgebaut wird. Die Federkonstante der Feder 19 und die Oberflächenbeschaffenheit des Reibschlussorgans 18 werden dabei so gewählt, dass die Trägheitskraft des Massenelements 5 beim Beschleunigen des Druckplattenbelichters 1 nicht ausreicht um die Reibungskraft zu überwinden. Durch diesen Reibschluss wird das Massenelement 5 durch die Welle 3 zusammen mit der Trommel 2 beschleunigt, so dass sich nichts an der relativen Position des Schwerpunktes CM des Massenelements 5 zur Trommel 2 ändert. Bei einem Betrieb des Druckplattenbelichters 1 wird die Welle 3 und damit auch das Massenelement 5 in Richtung des Pfeils 20 in Rotation versetzt.

Zur Einstellung der Drehstellung des Massenelements 5 befindet sich die Stelleinrichtung 8 in seiner unmittelbaren Umgebung. Die Stelleinrichtung 8 weist für die Einstellung der Drehstellung einen Festhalter 9 auf, der mittels eines Verstellers 21 in Richtung des Doppelpfeils 10 auf das Massenelement 5 zu und, mit Unterstützung einer Feder 22, die den Festhalter 9 in Richtung des Pfeils 23 von dem Massenelement 5 wegzieht, wieder weg bewegt werden kann. Die Feder 22 ist dafür mit dem Massenelement 5 und der symbolischen Berandung 11 verbunden.

Der Festhalter 9 ist auf einer Achse 24 gelagert. Auf diese Weise ist er leicht um diese Achse 24 herum verschwenkbar. Zum Verstellen des Festhalters 9 wird der Versteller 21 aktiviert, so dass der Festhalter 9 in Richtung des Massenelements 5 verschwenkt wird. Hierfür muss die Federkraft der Feder 22 überwunden werden. Soll der Festhalter 9 wieder von dem Massenelement 5 weggeschwenkt werden, so muss nur der Versteller 21 zurückgestellt, d.h. deaktiviert werden, und die Feder 22 zieht den Festhalter 9 wieder in eine Ruhelage von dem Massenelement 5 weg.

In der Fig. 2 ist der Festhalter 9 in einer aktivierten Position dargestellt. Der Festhalter 9 weist eine Nase 25 auf, mit der der Festhalter 9 den Bolzen 7 des Massenelements 5 kontaktiert. Stößt der Bolzen 7 bei einer Rotation des Massenelements 5 gegen die Nase 25 des Festhalters 9, so wird durch diesen Kontakt eine weitere Drehung des Massenelements 5 unterbunden. Die Reibungskraft zwischen der Bremsvorrichtung 17 und der Welle 3 wird überwunden und die Drehstellung des Massenelements 5 wird so lange relativ zur Welle 3, d.h. auch zur Trommel 2, verstellt, wie der Festhalter 9 in Kontakt mit dem Bolzen 7 bleibt. Ein Wegschwenken des Festhalters 9 von dem Massenelement 5 bewirkt, dass sich das Massenelement 5 wieder mit der Welle 3 mitdreht, ohne dass sich seine Drehstellung relativ zur Trommel 2 ändert.

Jedem Massenelement 5 ist zur Verstellen der Drehstellung eine Stelleinrichtung 8 zugeordnet.

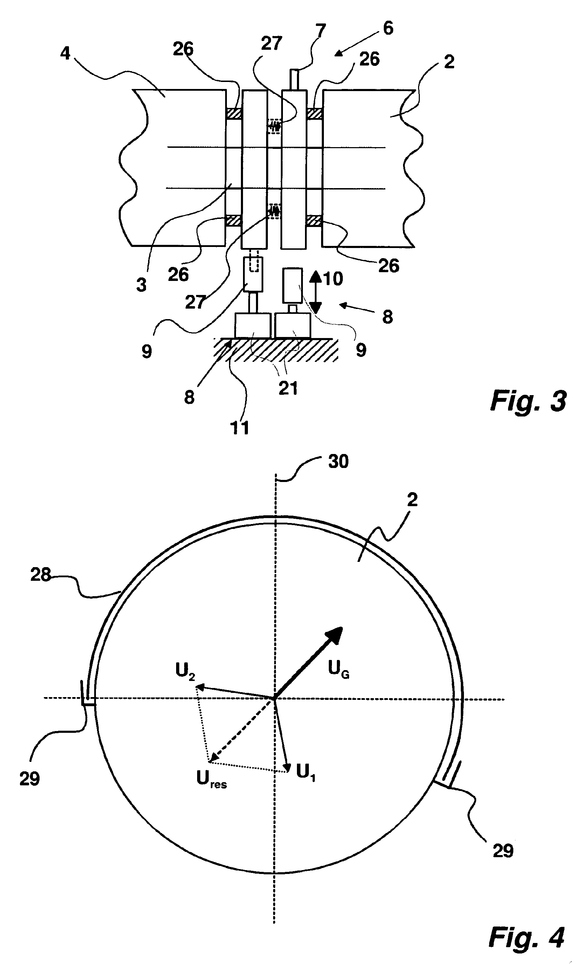

Eine alternative Bremsvorrichtung, zur Vermeidung einer ungewollten Verstellung der Massenelemente 5, ist in Fig. 3 dargestellt. Sie zeigt dafür einen Aufsichtsausschnitt eines Druckplattenbelichters 1. Gleiche Elemente werden auch hier mit gleichen Bezugszahlen bezeichnet.

In der hier dargestellten Vorrichtungsalternative einer Vorrichtung 6' zum Auswuchten einer Trommel 2 eines Druckplattenbelichters 1 besteht der Unterschied zur vorherigen Vorrichtung 6 in der hier dargestellten Bremsvorrichtung. Alle übrigen Beschreibung gelten auch für diese Ausführungsform und werden hier nicht noch einmal erläutert.

Zwei Massenelemente 5 sind auf der Welle 3 an einer Stirnseite der Trommel 2 gelagert. In unmittelbarer Nachbarschaft der Massenelemente 5 befinden sich das Widerlager 4 und die Trommel 2. Wobei für die hier geschilderte Bremsvorrichtung die Trommel 2 auch als Widerlager fungiert.

Zwischen den beiden Massenelementen 5 befinden sich Federn 27. In diesem Beispiel sind zwei Federn 27 erkennbar. Es können aber auch mehr Federn 27 oder auch nur eine verwendet werden, wobei jeweils darauf zu achten ist, dass ein möglichst gleichmäßiger Druck auf die Massenelemente 5 wirkt. Durch die Federn 27 werden die beiden Massenelemente 5 auseinander gedrückt. Zwischen den Massenelementen 5 und der Trommel 2, sowie dem Widerlager 4 befinden sich jeweils Reibschlussorgane 26, in der hier gewählten Darstellung sind es jeweils 2 Reibschlussorgane 26. Die dargestellten Größenverhältnisse sind nur symbolisch zu nehmen. Es kann auch sein, dass die gesamte Oberfläche der Massenelemente 5 als Reibschlussorgan 26 fungiert.

Die Reibschlussorgane 26 werden durch die Federn 27 gegen das Widerlager 4 und die Stirnfläche der Trommel 2 gepresst. Durch die Oberflächenbeschaffenheit der Reibschlussorgane 26 und der Federkraft der Federn 27 wird auf diese Weise eine Reibungskraft zwischen den Massenelementen 5 und der Trommel 2, bzw. dem Widerlager 4 erzeugt, die für eine rotationsmäßige Kopplung der Massenelemente 5 mit der Trommel 4 ausreicht.

Es sind auch hier wieder Stelleinrichtungen 8 vorgesehen, die einen Festhalter 9 aktivieren können, der über eine Nase 25 einen Bolzen 7 kontaktieren kann und auf diese Weise die Kopplung zwischen den Massenelementen 5 und der Trommel 2, zumindest zeitweise während der Kontaktierung, aufheben kann. Auf diese Weise können die Massenelemente 5 auf gewünschte Weise so verstellt werden, dass die insgesamt durch sie verursachte Unwucht gerade die Unwucht der Trommel 2 ausgleichen kann.

Fig. 4 zeigt eine zeichnerische Veranschaulichung der Unwucht eines bespannten Druckplattenbelichters 1 und wie die Unwucht erfindungsgemäß ausgeglichen wird.

Zur Vereinfachung ist die Trommel 2 des Druckplattenbelichters 1 nur symbolisch dargestellt, während auf eine explizite Darstellung der Massenelemente 5 bewusst verzichtet wurde. Statt dessen werden die jeweiligen Unwuchten U₁ und U₂ von zwei hierfür verwendeten Massenelementen 5 vektoriell dargestellt.

Eine Unwucht U ergibt sich rechnerisch aus dem Produkt der Masse m eines Körpers und dem Abstand y des Massenschwerpunkts CM von der Drehachse *U* = *m* · *y_{CM}*. Die resultierende Unwucht Uᵣₑₛ der beiden Massenelemente 5 ergibt sich durch Vektoraddition der beiden Einzelunwuchten U₁+U₂, wobei der jeweilige Vektor von der Drehachse zum jeweiligen Massenschwerpunkt zeigt.

Die Gesamtunwucht U_{G} der Trommel 2 ergibt sich hier aus der Summe der unterschiedlichen, hier zur besseren Übersichtlichkeit nicht dargestellten Unwuchten der Trommel 2 selber, einer aufgespannten Druckplatte 28, Klemmschieber 29 zum Einklemmen der Druckplatte 28 und eventuellen weiteren, hier nicht dargestellten Elementen. Die Gesamtunwucht U_{G} ist abhängig von der verwendeten Druckplatte 28, insbesondere bzgl. ihres Formates und ihres Gewichtes und über die Stellungen der Klemmschieber 29, die wiederum von dem Format der Druckplatte 28 abhängen.

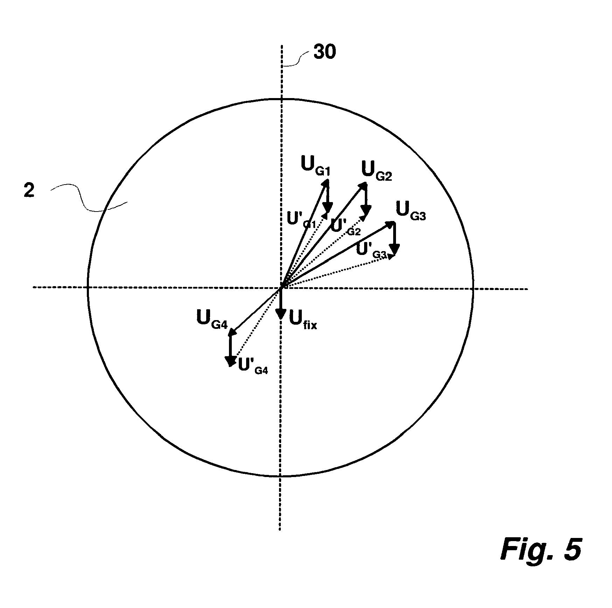

Zur besseren Veranschaulichung der vektoriellen Addition der unterschiedlichen Unwuchten ist ein Koordinatenkreuz 30 zeichnerisch über die Trommel 2 gelegt worden. Erfindungsgemäße Aufgabe ist es die Gesamtunwucht U_{G} zu verringern. Dieses gelingt dadurch, dass die Drehstellungen der beiden Massenelementen 5 jeweils über eine Stelleinrichtung 8 so eingestellt werden, dass die Unwuchten U₁ und U₂ der beiden Massenelemente 5 die Gesamtunwucht U_{G} ausgleichen. Solche eine Stellung der Massenelemente 5 ist in Fig. 5 skizziert, die beiden Unwuchten U₁ und U₂ addieren sich so, dass die resultierende Unwucht Uᵣₑₛ in der Richtung der Gesamtunwucht U_{G} der Trommel 2 entgegengesetzt gerichtet ist und betragsmäßig die Gesamtunwucht U_{G} ausgleicht. Bei einer Rotation der Trommel 2 wirkt sich daher keine Unwucht mehr effektiv aus.

Um Taumelbewegungen zu vermeiden werden, wie erwähnt, nach Möglichkeit identische Massenelemente 5 auf beiden Stirnseiten der Trommel 2 angebracht. Diese sollen dann auch symmetrisch ausgerichtet werden, so dass sich in der Praxis jede Unwucht U₁, U₂ und eventuelle weitere Unwuchten bei der Verwendung von mehreren Massenelementen 5, durch die Überlagerung der Unwuchten zweier symmetrisch ausgerichteter Massenelemente 5 auf den unterschiedlichen Stirnseiten der Trommel 2 ergibt.

In der Fig. 5 ist eine Veranschaulichung der Wirkung einer fixen Gegenunwucht U_{fix} zeichnerisch dargestellt. Für das Zustandekommen der Unwuchten gilt das bereits zu Fig. 4 gesagte. Hier ist nur die Trommel 2 und ein Koordinatenkreuz 30 symbolisch dargestellt. Die Pfeile U_{G1}, U_{G2}, U_{G3} und U_{G4} geben die möglichen Gesamtunwuchten U_{G} bei der Verwendung verschiedener Druckplatten 28 an. In dem hier dargestellten Fall ist eine fixe Gegenunwucht U_{fix} in der Trommel 2 integriert, die den Schwerpunkt der Trommel 2 in Richtung des angegebenen Pfeils von der Drehachse verschiebt. Die fixe Gegenunwucht U_{fix} addiert sich jeweils vektoriell zu den möglichen Gesamtunwuchten U_{G1}, U_{G2}, U_{G3} und U_{G4}, hieraus resultieren dann jeweils neue Gesamtunwuchten U'_{G1}, U'_{G2}, U'_{G3} und U'_{G4}. Die Beträge dieser neuen Gesamtunwuchten U'_{G1}, U'_{G2}, U'_{G3} und U'_{G4} sind gegenüber den ursprünglichen Gesamtunwuchten teilweise verringert und teilweise vergrößert. Insgesamt ist hierbei aber die mögliche maximale neue Gesamtunwucht kleiner als die maximale ursprüngliche Unwucht, so dass geringere Gewichte der Massenelemente 5 zur Verringerung der maximalen Unwucht notwendig sind. Die fixe Gegenunwucht U_{fix} wird so gewählt, dass sich eine Verringerung der möglichen maximalen Gesamtunwucht für alle mit dem Druckplattenbelichter 1 zu belichtenden Druckplatten 28 ergibt. Insgesamt kann damit eine Verringerung der notwendigen Gewichte der Massenelemente 5 erreicht werden.

Auf die Trommel 2 des Druckplattenbelichters 1 können eine Anzahl von unterschiedlichen Druckplatten 28 mittels der Klemmschieber 29 eingespannt werden. Je nach Format ändert sich hierbei die Position zumindest eines Klemmschiebers 29. Durch die unterschiedlichen Gewichte der Druckplatten 28 und die jeweils unterschiedlichen Positionen der Klemmschieber 29 kann jeder Druckplatte 28 eine bestimmte Gesamtunwucht U_{G} zugeordnet werden, bei. Diese Gesamtunwucht U_{G} kann experimentell bestimmt werden, sie kann aber auch leicht von einem Fachmann rechnerisch bestimmt werden, wenn die Position der Druckplatte 28 auf dem Umfang der Trommel 2, das Gewicht der Druckplatte 28, sowie die Gewichte und Positionen der Klemmschieber 29 bekannt sind.

Sind z.B. vier Druckplatten 28 in dem Druckplattenbelichter 1 verwendbar ergeben sich die vier Gesamtunwuchten U_{G1}, U_{G2}, U_{G3} und U_{G4}. Es können aber auch durchaus mehr Platten verwendbar sein, dann ergeben sich entsprechend mehr Gesamtunwuchten. Diese Gesamtunwuchten U_{G1}, U_{G2}, U_{G3} und U_{G4} sind bekannt. Von diesen Gesamtunwuchten ist beispielsweise die maximale Gesamtunwucht die U_{G3}. Zur Verringerung der maximalen Gesamtunwucht kann nun eine fixe Gegenunwucht U_{fix} in die Trommel 2 integriert werden. U_{fix} addiert sich nun zu jeder Gesamtunwucht U_{G1}, U_{G2}, U_{G3} und U_{G4}, so dass sich neue Gesamtunwuchten U'_{G1}, U'_{G2}, U'_{G3} und U'_{G4} ergeben. Durch die vektorielle Addition ändern sich die Beträge der Gesamtunwuchten auf unterschiedliche Weise, je nach ihrer genauen Position. Die neue maximale Gesamtunwucht kann hier beispielsweise U'_{G4} sein. Durch die fixe Gegenunwucht U_{fix} wird aber erreicht, dass U'_{G4} < U_{G3} ist.

Die Gesamtmassen der Massenelemente 5 sollen ausreichen um auch die maximale Gesamtunwucht auszugleichen. Durch die fixe Gegenunwucht U_{fix} werden geringere Gesamtmassen der Massenelemente 5 benötigt. Es kann aber auch auf die fixe Gegenunwucht U_{fix} verzichtet werden, dies kann z.B. der Fall sein, wenn ein bereits installierter Druckplattenbelichter 1 mit einer Vorrichtung 6 zur Verringerung der Unwucht der Trommel 2 nachgerüstet werden soll, hier sind dann entsprechend größere Gesamtmassen der Massenelemente 5 notwendig.

Je nachdem, ob eine fixe Gegenunwucht U_{fix} verwendet wird oder nicht, werden die Gesamtunwuchten U'_{G1}, U'_{G2}, U'_{G3} und U'_{G4} oder U_{G1}, U_{G2}, U_{G3} und U_{G4} durch die Unwuchten U₁ und U₂ der Massenelemente 5 ausgeglichen. Hierfür müssen die Massenelemente 5 in entsprechende Drehstellungen gestellt werden. Jeder Druckplatte 28 wird dafür eine Drehstellung der Massenelemente 5 zugeordnet, wie sie in Fig. 4 dargestellt ist und bzgl. dieser Figur bereits erläutert wurde. Die Zuordnung wird in einer Zuordnungstabelle auf einem geeigneten, nicht dargestellten Datenträger festgehalten, die durch eine nicht dargestellte CPU ausgelesen werden kann. Auf diese Weise kann die Stelleinrichtung 8 durch die CPU automatisch so aktiviert werden, dass die Massenelemente 5 in die gewünschten Drehstellungen verstellt werden.

Wird eine neue Druckplatte 28, die sich von einer eventuell vorher eingespannten Druckplatte 28 unterscheidet, auf die Trommel 2 aufgespannt, so kann ein Bediener der CPU die Art der Druckplatte 28 über eine nicht dargestellte Schnittstelle mitteilen. Die CPU aktiviert dann zunächst die Stelleinrichtungen 8 und lässt die Trommel 2 zwei vollständige Umdrehungen fahren. Auf diese Weise sind die Unwuchten U₁ und U₂ der Massenelemente 5 parallel zu einander und in einer bestimmten Drehstellung angeordnet, wie es bereits zur Fig. 2 ausgeführt wurde. Als nächstes können die Stelleinrichtungen 8 jeweils unabhängig von einander so durch die CPU aktiviert werden, dass die Drehstellungen der Massenelemente 5 relativ zu einander und zur Gesamtunwucht U_{G} so eingestellt werden, wie es in der Zuordnungstabelle vorgegeben ist. Auf diese Weise kann die Gesamtunwucht U_{G} durch die Überlagerung der Unwuchten U₁ und U₂ ausgeglichen, zumindest aber verringert werden.

Bei der Verwendung einer fixen Unwucht U_{fix} erfolgt die Einstellung der Massenelemente 5 analog so, dass die Gesamtunwucht U'_{G} ausgeglichen, zumindest aber verringert wird.

## Patentansprüche

1. Vorrichtung zum Auswuchten einer, mit einer Welle (3) angetriebenen Trommel (2) einer Belichtungseinrichtung, insbesondere eines Druckplattenbelichters (1), umfassend wenigstens zwei, beweglich angeordnete Massenelemente (5),
wobei die wenigstens zwei Massenelemente (5), mit jeweils von der Welle (3) beabstandeten Schwerpunkten (16), unabhängig voneinander und von der Trommel (2) auf der Welle (3) drehbar gelagert sind, und
wenigstens eine Bremsvorrichtung (17) zur Vermeidung von ungewollten Verstellungen der wenigstens zwei Massenelemente (5) vorgesehen ist,
**dadurch gekennzeichnet,**
**dass** die Bremsvorrichtung (17) wenigstens ein Reibschlussorgan (18, 26) umfasst.

2. Vorrichtung nach Anspruch 1,
**dadurch gekennzeichnet,**
**dass** das wenigstens eine Reibschlussorgan (18, 26) federbelastet ist.

3. Vorrichtung nach den Ansprüchen 1 und 2,
**dadurch gekennzeichnet,**
**dass** die Reibschlussorgane (18, 26) Kontakte der Massenelemente (5) zu Widerlagern (14) in Axialrichtung der Welle (3) und/oder zwischen den Massenelementen (5) selber bilden.

4. Vorrichtung nach den Ansprüchen 1 und 2,
**dadurch gekennzeichnet,**
**dass** die Reibschlussorgane (18) Kontakte der Massenelemente (5) zur Welle (3) bilden.

5. Vorrichtung nach wenigstens einem der Ansprüche 1 bis 4,
**dadurch gekennzeichnet,**
**dass** die wenigstens zwei Massenelemente (5) wenigstens zwei schellenartige, trennbare Teilelemente (12, 13) umfassen.

6. Vorrichtung nach einem der Ansprüche 1 und 5,
**dadurch gekennzeichnet,**
**dass** die Massenelemente im Wesentlichen Scheiben sind, deren Schwerpunkt durch Materialaussparungen exzentrisch verlagert ist.

7. Vorrichtung nach einem der Ansprüch1 und 5,
**dadurch gekennzeichnet,**
**dass** die Massenelemente (5) im Wesentlichen Scheiben sind, deren Schwerpunkt durch Materialauswüchse exzentrisch verlagert ist.

8. Vorrichtung nach einem der Ansprüche 1 und 5,
**dadurch gekennzeichnet,**
**dass** die Massenelemente (5) im Wesentlichen Scheiben sind, die zur exzentrischen Verlagerung der Schwerpunkte jeweils inhomogene Dichten aufweisen.

9. Vorrichtung nach wenigstens einem der Ansprüche 6 bis 8,
**dadurch gekennzeichnet,**
**dass** die Massenelemente im Wesentlichen kreisrund sind.

10. Vorrichtung nach wenigstens einem der Ansprüche 1 bis 9,
**gekennzeichnet durch**
wenigstens eine Stelleinrichtung (8) für die wenigstens zwei Massenelemente (5), zum Einstellen ihrer Drehstellung auf der Welle (3).

11. Vorrichtung mit einer Stelleinrichtung nach Anspruch 10,
**dadurch gekennzeichnet,**
**dass** wenigstens ein Festhalter (9) zum zumindest zeitweisen Festhalten zumindest eines Massenelements (5) relativ zur Bewegung der Welle (3) vorgesehen ist.

12. Vorrichtung mit einer Stelleinrichtung nach Anspruch 11,
**dadurch gekennzeichnet,**
**dass** der wenigstens eine Festhalter (9), vorzugsweise gesteuert, in Funktion schaltbar ist.

13. Vorrichtung nach einem oder mehreren der vorherigen Ansprüche,
**dadurch gekennzeichnet,**
**dass** wenigstens jeweils zwei Massenelemente (5) vor jeder Stirnseite der Trommel (2) angeordnet sind.

14. Vorrichtung nach einem oder mehreren der vorherigen Ansprüche,
**dadurch gekennzeichnet,**
**dass** eine fixe Gegenunwucht (U_{fix}) von der Trommel (2) umfasst wird.

## Claims

1. Device for balancing a drum (2) that is part of an exposure device, in particular a platesetter (1), and is driven by a shaft (3), comprising
at least two mass elements (5) that are arranged to be movable,
the at least two mass elements (5) having centers of mass (16) that are respectively spaced apart from the shaft (3) and being mounted on the shaft (3) so as to rotate independently of one another and of the drum (2), and
at least one braking device (17) for avoiding undesired displacement of the at least two mass elements (5),
**characterized in**
**that** the braking device (17) comprises at least one frictional connection element (18, 26).

2. Device according to Claim 1,
**characterized in**
**that** the at least one frictional connection element (18, 26) is spring-loaded.

3. Device according to Claims 1 and 2,
**characterized in**
**that** the frictional connection elements (18, 26) form contacts between the mass elements (5) and abutments (14) in the axial direction of the shaft (3) and/or between the mass elements (5) themselves.

4. Device according to Claims 1 and 2,
**characterized in**
**that** the frictional connection elements (18) form contacts between the mass elements (5) and the shaft (3).

5. Device according to at least one of Claims 1 to 4,
**characterized in**
**that** the at least two mass elements (5) comprise at least two clip-like, divisible element parts (12, 13).

6. Device according to any one of Claims 1 and 5,
**characterized in**
**that** the mass elements are essentially disks the centre of mass of which is eccentrically shifted by recesses in the material.

7. Device according to any one of Claims 1 and 5,
**characterized in**
**that** the mass elements are essentially disks whose centre of mass is eccentrically displaced by protrusions of the material.

8. Device according to any one of Claims 1 and 5,
**characterized in**
**that** the mass elements (5) are essentially disks each of which has an inhomogeneous density to displace the centre of mass eccentrically.

9. Device according to at least one of Claims 6 to 8,
**characterized in**
**that** the mass elements are essentially circular.

10. Device according to at least one of Claims 1 to 9,
**characterized by**
at least one adjusting device (8) for adjusting the rotational position of the at least two mass elements (5) on the shaft (3).

11. Device comprising an adjusting device according to Claim 10,
**characterized in**
**that** at least one retainer (9) is provided for temporarily retaining at least one mass element (5) relative to the movement of the shaft (3).

12. Device comprising an adjusting device according to Claim 11,
**characterized in**
**that** at least one retainer (9) is activatable, preferably in a controlled way.

13. Device according to one or more of the preceding claims,
**characterized in**
**that** at least two respective ones of the mass elements (5) are arranged in front of each end of the drum (2).

14. Device according to one or more of the preceding claims,
**characterized in**
**that** the drum (2) comprises a fixed counterbalance (U_{fix}).

## Revendications

1. Dispositif pour l'équilibrage d'un tambour (2) d'un dispositif d'éclairage entraîné par un arbre (3), en particulier d'un dispositif d'éclairage de plaque de serrage (1), comprenant au moins deux éléments de masse (5) disposés de manière mobile,
◆ les au moins deux éléments de masse (5) étant logés pivotant sur l'arbre (3) avec des centres de gravité (16) respectivement à distance de l'arbre (3), indépendamment l'un de l'autre et du tambour (2), et
◆ au moins un dispositif de freinage (17) pour éviter les déplacements non voulus des au moins deux éléments de masse (5) étant prévu,
**caractérisé en ce que** le dispositif de freinage (17) comprend au moins un organe d'entraînement par friction (18, 26).

2. Dispositif selon la revendication 1, **caractérisé en ce que** cet au moins un organe d'entraînement par friction (18, 26) est commandé par ressort.

3. Dispositif selon les revendications 1 et 2, **caractérisé en ce que** les organes d'entraînement par friction (18, 26) forment eux-mêmes des contacts des éléments de masse (5) avec des butées (14) en direction axiale de l'arbre (3) et/ou entre les éléments de masse (5).

4. Dispositif selon les revendications 1 et 2, **caractérisé en ce que** les organes d'entraînement par friction (18) forment des contacts des éléments de masse (5) avec l'arbre (3).

5. Dispositif selon au moins l'une quelconque des revendications 1 à 4, **caractérisé en ce que** les au moins deux éléments de masse (5) comprennent au moins deux éléments partiels (12, 13) séparables semblables à des colliers.

6. Dispositif selon l'une quelconque des revendications 1 et 5, **caractérisé en ce que** les éléments de masse sont essentiellement des disques, dont le centre de gravité est déplacé de manière excentrique par des évidements du matériau.

7. Dispositif selon l'une quelconque des revendications 1 et 5, **caractérisé en ce que** les éléments de masse (5) sont essentiellement des disques, dont le centre de gravité est déplacé de manière excentrique par des excroissances du matériau.

8. Dispositif selon l'une quelconque des revendications 1 et 5, **caractérisé en ce que** les éléments de masse (5) sont essentiellement des disques, lesquels présentent respectivement des masses volumiques non homogènes destinées au déplacement excentrique des centres de gravité.

9. Dispositif selon au moins l'une quelconque des revendications 6 à 8, **caractérisé en ce que** les éléments de masse sont essentiellement circulaires.

10. Dispositif selon au moins l'une quelconque des revendications 1 à 9, **caractérisé par** au moins un dispositif de réglage (8) pour les au moins deux éléments de masse (5), destiné au réglage de leur position de rotation sur l'arbre (3).

11. Dispositif avec un dispositif de réglage selon la revendication 10, **caractérisé en ce qu'**on prévoit au moins un dispositif de retenue (9) destiné à la retenue au moins par intermittence d'au moins un élément de masse (5) par rapport au mouvement de l'arbre (3).

12. Dispositif avec un dispositif de réglage selon la revendication 11, **caractérisé en ce que** cet au moins un dispositif de retenue (9) peut être commuté lors du fonctionnement de préférence de manière contrôlée.

13. Dispositif selon l'une quelconque ou plusieurs des revendications précédentes, **caractérisé en ce que** respectivement au moins deux éléments de masse (5) sont disposés devant chaque côté frontal du tambour (2).

14. Dispositif selon l'une quelconque ou plusieurs des revendications précédentes, **caractérisé en ce que** le tambour (2) englobe une masse non équilibrée antagoniste fixe (U_{fix}).
